Europäisches Patentamt

(19) European Patent Office

Office européen des brevets

(11) Publication number: **0 317 082 B1**

## (12) EUROPEAN PATENT SPECIFICATION

(45) Date of publication of patent specification:
17.04.91 Bulletin 91/16

(21) Application number: 88309834.5

(22) Date of filing: 20.10.88

(51) Int. Cl.⁵: **H04H 9/00, H04M 11/00**

(54) Spontaneous reporting of remotely generated data.

(30) Priority: 20.11.87 US 123568

(43) Date of publication of application:
24.05.89 Bulletin 89/21

(45) Publication of the grant of the patent:
17.04.91 Bulletin 91/16

(84) Designated Contracting States:
AT BE CH DE ES FR GB GR IT LI LU NL SE

(56) References cited:
EP-A- 0 013 982
EP-A- 0 050 451
WO-A-81/02085
US-A- 4 086 434

(73) Proprietor: GENERAL INSTRUMENT
CORPORATION
767 Fifth Avenue
New York New York 10153 (US)

(72) Inventor: Bennett, Christopher John
4820 Vista Street
San Diego California 92116 (US)

(74) Representative: Blatchford, William Michael et
al
Withers & Rogers 4 Dyer's Buildings Holborn
London EC1N 2JT (GB)

Jouve, 18, rue Saint-Denis, 75001 PARIS

## Description

The present invention generally pertains to reporting remotely generated data to a central station and is particularly directed to reporting program viewing data in an impulse pay-per-view subscription television system.

In prior art systems, data pertaining to predetermined subject matter is stored at remote locations and subsequently reported to a central station either periodically or in response to an interrogation signal. Typical prior art systems are described in United States Letters Patents Nos. 4,578,700 to Roberts et al, 4,584,602 to Nakagawa, 4,528,589 to Block et al. and 4,710,955 to Kauffman.

A reporting device having memory means for storing remotely generated data is known from EP-A-0050451 of Minnesota Mining and Manufacturing Company. In this prior device, which is useful in data communication over telephone lines between a plurality of satellite stations and a central station, control means are provided for causing stored data to be reported in response to storage in the memory means of at least a minimum amount of data, independently of responding to an interrogation signal requesting the report.

Another reporting device is known from WO81/02085, in which a subscriber's use of a cable television device is monitored by a remote unit initiating the transmission of data to a central computer. The data includes a unique identity code corresponding to the remote unit, TV channels selected and the time of selection. The remote unit is capable of retransmitting stored data in the event of an unsuccessful contact.

The present invention, in accordance with one aspect thereof, provides a device for spontaneously reporting remotely generated data to a central station, said device comprising :

memory means for storing said remotely generated data ; and
control means for causing said stored data to be spontaneously reported in response to the storage in the memory means of at least a predetermined minimum amount of said data, independently of responding to any interrogation signal requesting said report, characterised by said control means comprising clock means for indicating elapsed time ;
means for processing said elapsed time indication to define a recurring group of time slots within which to make said reports ;
means for assigning a predetermined time slot within said group for said reporting of said stored data following the storage in the memory means of at least said predetermined minimum amount of said data, with said time slot being assigned in accordance with predetermined criteria ;

means for monitoring whether said stored data was successfully reported to said central station; and
means for trying again to cause said stored data to be reported, when the previous try to report said stored data to the central station was unsuccessful, by causing said stored data to be reported in a different predetermined time slot within said group than that used for the last said unsuccessful report.

By providing for the spontaneous reporting of remotely stored data, it is not necessary to provide interrogation signals to prompt the stored data reports, and it is not necessary to make periodic reports when there is insufficient stored data to warrant a report. As a result the limited amount of time available for reporting data to a given central station can be utilized to receive reports from more remotely located reporting devices

The device of the present invention may be coupled to a descrambler at a subscriber location for storing data pertaining to subject matter descrambled by said descrambler and for spontaneously reporting said stored data to said central station. The control means preferably further comprise means for storing the predetermined criteria, and means for changing the stored predetermined criteria. The predetermined criteria may include identification of time slots assigned to the device for reporting the stored data.

In a preferred embodiment of the device of the invention, the control means further comprise :
means for storing an indication of a predetermined minimum count of the amount of unreported data that must be stored in the memory means in order to trigger said reporting of said stored data ;
means for maintaining a count of the amount of unreported data stored in the memory means ; and
means for triggering said report upon determining that the maintained count of unreported data stored in the memory means reaches said stored predetermined minimum count.

According to another aspect of the invention, there is provided a system including a plurality of such reporting devices, the system being characterised by the number of time slots in the group being less than the number of said devices in the system ; and by said means for trying again including means for causing said stored data to be reported in a different predetermined time slot within said group than that used for the last said unsuccessful report.

Such a system may be used for reporting data from subscriber locations in a descrambling system, wherein the individual devices are coupled to descramblers at respective subscriber locations for storing data pertaining to subject matter descrambled by the respective descramblers and for reporting the stored data to a central office. In a preferred embodiment in which each descrambler is a television descrambler in an impulse pay-per-view television system, the stored and reported data identifies each impulse pay-per-view program that is descrambled.

The invention will now be described by way of example with reference to the drawing in which :

Figure 1 is a diagram of a preferred embodiment of the present invention ; and

Figure 2 illustrates the relationship between time slots, groups of time slots and a reporting window in which reports of stored data are made in accordance with the present invention.

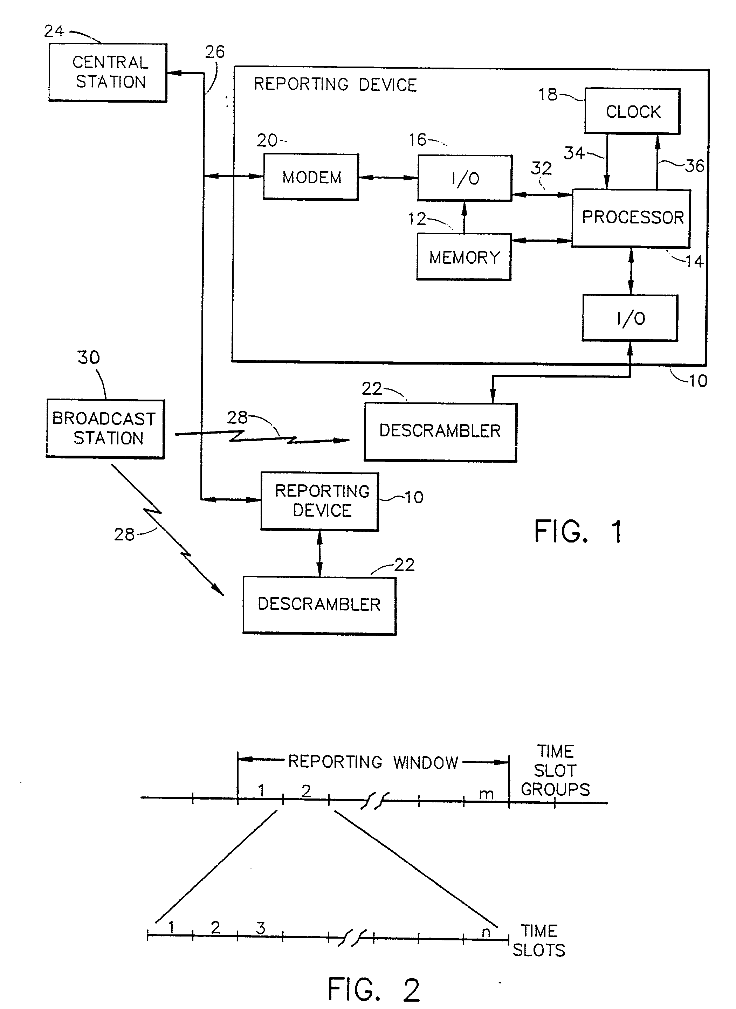

Referring to Figure 1, a preferred embodiment of a reporting device 10 in accordance with the present invention includes a memory 12, a processor 14, and input/output (I/O) unit 16, a clock 18 and a modem 20. The functions of the aforementioned control unit are performed by the combination of the processor 14, the memory 12, the I/O unit 16 and the clock 18.

In the preferred embodiment, each of a plurality of such reporting devices 10 is coupled to a descrambler 22 in an impulse pay-per-view television system for respectively storing and reporting data pertaining to subject matter descrambled by the descramblers 22. A plurality of such reporting devices 10 are coupled to a central station 24 by telephone lines 26. The modem 20 couples the I/O unit 16 of the reporting device 10 to the telephone lines 26.

The descrambler 22 receives scrambled television programs over a data link 28 from a broadcasting station 30. The data link 28 may include an over-the-air broadcast channel and/or some hard-wired data link, such as cable. The reporting device 10 is coupled to the central station 24 by the telephone lines 26 for reporting the stored data to the central station 24.

In the preferred embodiment, the memory 12 stores data identifying each impulse pay-per-view program that is descrambled by the descrambler 22. The processor 14 maintains a count of the amount of data that has been stored in the memory 12. The processor 14 may also categorize the stored data. For example, it may group program identification data by the channels on which the program were shown.

An indication of the predetermined minimum amount of data that must be stored in the memory 12 in order to trigger a reporting of the stored data to the central station 24 also is stored in the memory 12. The predetermined minimum amount of data indication may be a predetermined count of unreported stored program identification data. After the processor 14 determines that the predetermined minimum amount of program identification data has been stored in the memory 12, the processor 14 provides a report trigger signal on line 32 to the I/O unit 16 during the next time slot assigned to the reporting device 10 for reporting stored data to the central station 24.

The I/O unit 16 responds to the trigger signal on line 32 by sending the data stored in the memory 12 over the telephone lines 26 to the central station 24. A unique identification code, such as the address of the descrambler 22 accompanies the stored data sent to the central station 24. The trigger signal on line 32 may also indicate the telephone number at the central station 24 to which the report is to be made, inasmuch as different categories of reports may be made to different programmers utilizing the central station 24. Also, different central stations 24 may receive different types of reports. Such telephone numbers are stored in the memory 12 and retrieved by the processor 14 when providing the trigger signal on line 32.

Time slots for reporting the stored data are assigned in accordance with predetermined criteria stored in the memory 12. The processor 14 defines the time slots by processing a signal on line 34 indicating elapsed time that provided by the clock 18. The clock 18 of each reporting device 10 is synchronized with a master clock in the central station 24 by a synchronization signal on line 36 received from the central station 24 via the telephone lines 26, the modem 20, the I/O unit 16 and the processor 14. In an alternative embodiment, the synchronization signal on line 36 may be provided from the broadcast station 30 via the data link 28, the descrambler 22 and the processor 14. The synchronization signal on line 36 indicates the current time in terms of the slot count and the time in seconds remaining until the next slot boundary. Each time slot must be of sufficient duration to effect a maximum duration data report. The clock 18 is synchronized when put into operation and from time to time during operation.

The storage in the memory 12 of the telephone number(s) of the central station(s) 24, of the predetermined criteria for defining and assigning time slots in which to report the stored data, and of the indication of the predetermined minimum amount of data that must be stored before making the report may be initialized and/or changed in response to signals received by the processor 14 from the central station 24 via the telephone lines 26 or from the broadcast station 30 via the data link 28 and the descrambler 22.

Time slot assignment is explained with reference to Figure 2. Reports are made spontaneously only during a time window defined by that portion of each day, generally late at night, when telephone line usage and charges are lower. This reporting period is shown in Figure 2 as the "reporting window". The clock 18 is reset to zero every twenty-four hours at a predetermined time so that the defined slots for the beginning and the ending of the reporting window match the current slot count every twenty-four hours. A guard band may be provided before and after the reporting window to allow for inaccuracy relative to the start and the end of the reporting window.

Different time slots for making reports within the reporting window are assigned to different reporting devices 10 in the system, with the initial reporting order for the respective reporting devices 10 being assigned in accordance with the order in which the associated descramblers 22 were authorized within the system to receive scrambled impulse pay-per-view television programs. During each reporting window there are "m" groups of time slots ; and during each group of time slots there are "n" time slots. The processor 14 identifies time slots by their respective positions 1, 2,..., n in each recurring group. The duration of each time slot is defined by predetermined criteria stored in the memory 12.

Typically there are more reporting devices 10 in the system than there are time slots available for making reports. Accordingly, the assignment sequence wraps around, whereby a plurality of reporting devices 10 may be assigned the same initial reporting time slot within each group of time slots. Some of the time slots within each reporting window are not assigned to initial reporting attempts in order to increase the probability of time slots being available for retry reporting attempts. The initial reporting time slot assigned to the reporting device 10 is stored in the memory 12. Different time slot positions within subsequent groups of time slots are calculated in accordance with an algorithm for assignment when the initial report is not successfully received by the central station 24 and it becomes necessary for the reporting device 10 to try again to report the stored data. The algorithm is defined by predetermined criteria applicable for retry attempts.

An indication as to whether any given report is successfully received by the central station 24 is provided by the central station to the reporting device 10 over the telephone lines 26 and monitored by the processor 14. When the processor 14 determines that the data report was not successfully received, the processor 14 calculates the time slot to be used for retrying to report the data and then provides another report trigger signal on line 32 to the I/O unit 16. Upon each retry attempt, the report trigger signal on line 32 is provided during a different time slot position than was used for the last previous attempt to report the stored data. As noted above, the time slot assignment for retry attempts is calculated in accordance with an algorithm defined by predetermined criteria. The predetermined criteria applicable to retry attempts are defined by firmware in the processor 14 ; and the values of the parameters of such criteria are stored in the memory 12. Such predetermined criteria should ensure that each time slot has a constant probability that a given reporting device 10 will attempt to use it and achieve a uniform randomization of load on the telephone lines 26 regardless of the system configuration. In the preferred embodiment, such predetermined criteria include the following :

Each reporting device 10 in the system may make one attempt to retry reporting the stored data during each group of m time slots.

The time slot chosen for the first retry attempt is the next slot within the next group within the reporting window, whose slot count (position in the group) is equal to the least significant byte of the address of the descrambler 22 associated with the reporting device 10.

The time slot chosen for subsequent retry attempts is the next slot within the respective subsequent groups within the reporting window whose slot count is equal to the previously used slot count plus the next unused byte of the descrambler address, modulo m.

If all the bytes of the descrambler address are used, the quantity added to the last slot count is either the least significant byte of the descrambler address (if the sum of the bytes of the descrambler address is odd) or one (if the sum of the bytes of the descrambler address is even). In the latter case, the quantity added to the sum on the following attempt is the least significant byte of the descrambler address. The descrambler address is repeatedly reused in this fashion until the retry attempts are terminated.

The retry attempts are terminated when the processor 14 receives an indication on line 26 from the central station 24 that the stored data has been successfully reported to the central station 24. When the processor 14 receives such an indication of success, it records the data then stored in the memory 12 as having been reported so that any subsequent reports to the central station 24 need not include the previously reported data.

Retry attempts are terminated when a predetermined number of successive unsuccessful attempts to report the stored data have been undertaken. The number of unsuccessful attempts necessary for such termination is stored in the memory 12 and compared with the number of unsuccessful attempt indications, which is counted by the processor 14.

The processor 14 also provides a trigger signal on line 32 to cause a report of whatever data has been stored in the memory 12 in the event that no trigger signal has been generated in response to the storage of at least the predetermined minimum amount of data in the memory 12 over at least a predetermined period (a number of days) since the last report. An indication of such predetermined period also is stored in the memory 12.

The reporting device of the present invention also has other applications, such as reporting television audience survey data from sample viewers, reporting diagnostic information from external devices and reporting EFT (electronic fund transfer) data.

## Claims

1. A device (10) for spontaneously reporting remotely generated data to a central station (24), said device comprising :

memory means (12) for storing said remotely generated data ; and

control means (14, 18) for causing said stored data to be spontaneously reported in response to the storage in the memory means of at least a predetermined minimum amount of said data, independently of responding to any interrogation signal requesting said report, characterized by said control means comprising

clock means (18) for indicating elapsed time ;

means (14) for processing said elapsed time indication to define a recurring group of time slots within which to make said reports ;

means (14) for assigning a predetermined time slot within said group for said reporting of said stored data following the storage in the memory means of at least said predetermined minimum amount of said data, with said time slot being assigned in accordance with predetermined criteria ;

means (14) for monitoring whether said stored data was successfully reported to said central station, and

means (14) for trying again to cause said stored data to be reported, when the previous try to report said stored data to the central station was unsuccessful, by causing said stored data to be reported in a different predetermined time slot within said group than that used for the last said unsuccessful report.

2. A device (10) according to Claim 1, characterized by said device being coupled to a descrambler (22) at a subscriber location for storing data pertaining to subject matter descrambled by said descrambler and for spontaneously reporting said stored data to said central station (24).

3. A device (10) according to any of the preceding claims, characterized by said control means further comprising :

means (12) for storing said predetermined criteria ; and

means (14) for changing said stored predetermined criteria

4. A device (10) according to any of the preceding claims, characterized by said control means further comprising :

means (12) for storing an indication of a predetermined minimum count of the amount of unreported data that must be stored in the memory means (12) in order to trigger said reporting of said stored data ;

means (14) for maintaining a count of the amount of unreported data stored in the memory means (12) ; and

means (14) for triggering said report upon determining that the maintained count of unreported data stored in the memory means (12) reaches said stored predetermined minimum count.

5. A device (10) according to Claim 2, characterized by said descrambler (22) being a television descrambler in an impulse pay-per-view television system, and by said memory means (12) storing data identifying each impulse pay-per-view program that is descrambled.

6. A system including a plurality of said devices (10) according to any of the preceding claims, characterized by the number of time slots in the group being less than the number of said devices in the system ; and by said means for trying again including means for causing said stored data to be reported in a different predetermined time slot within said group than that used for the last said unsuccessful report.

## Ansprüche

1. Ein Geraet (10) zum spontanen Melden von fernerzeugten Daten an eine Zentralstation (24), wobei das Geraet aufweist :

eine Speichereinrichtung (12) zum Speichern der besagten fernerzeugten Daten ; und

eine Steuereinrichtung (14, 18), die veranlasst, dass die genannten gespeicherten Daten als Folge einer Dateneingabe in die Speichereinrichtung von mindestens einer vorbestimmten minimalen Menge an besagten Daten, unabhaengig von jeglichen, die Meldung abrufenden Abfragesignalen, spontan gemeldet werden, gekennzeichnet dadurch, dass die genannte Steuereinrichtung aufweist :

eine Zeitmessereinrichtung (18) zum Anzeigen der vergangenen Zeit ;

eine Einrichtung (14) zum Verarbeiten der Angabe der vergangenen Zeit, um eine sich wiederholende Gruppe von Zeitschlitzen zu definieren, innerhalb welcher solche Meldungen erfolgen ;

eine Einrichtung (14) zum Zuordnen eines vorbestimmten Zeitschlitzes innerhalb dieser Gruppe fuer das genannte Melden der genannten gespeicherten Daten nach der Dateneingabe von mindestens der genannten minimalen Menge an genannten Daten, wobei der Zeitschlitz in Uebereinstimmung mit den vorbestimmten Kriterien zugeordnet wird ;

eine Einrichtung (14) zum Ueberwachen, ob die besagten, gespeicherten Daten erfolgreich an die besagte Zentralstation gemeldet wurden ; und

eine Einrichtung (14), die einen erneuten Versuch veranlasst, dass die genannten gespeicherten Daten gemeldet werden, wenn der vorhergehende Meldeversuch der gespeicherten Daten an die Zentralstation erfolglos war, indem die genannten gespeicherten Daten in einem anderen vorbestimmten Zeitschlitz innerhalb der genannten Gruppe, als dem bei der genannten letzten erfolglosen Meldung verwendeten, gemeldet werden.

2. Ein Geraet (10) nach Anspruch 1, dadurch gekennzeichnet, dass das genannte Geraet am Standort eines Abonnenten an einen Descrambler (22) gekoppelt ist, um die Daten, die zu dem von dem genannten Descrambler entzerrten Gegenstand gehoeren, zu speichern und diese gespeicherten Daten spontan an die genannte Zentralstation (24) zu melden.

3. Ein Geraet (10) nach einem der vorhergehenden Ansprueche, dadurch gekennzeichnet, dass die Steuereinrichtung weiterhin aufweist :

eine Einrichtung (12) zum Speichern der genannten vorbestimmten Kriterien ; und

eine Einrichtung (14) zum Aendern der genannten vorbestimmten Kriterien.

4. Ein Geraet (10) nach einem der vorhergehenden Ansprueche, dadurch gekennzeichnet, dass die Steuereinrichtung weiterhin aufweist :

eine Einrichtung (12) zum Speichern einer Angabe ueber die vorbestimmte minimale Anzahl an Daten aus der Menge der nicht gemeldeten Daten, die in der Speichereinrichtung (12) gespeichert werden muss, um das genannte Melden der genannten gespeicherten Daten zu aktivieren ;

eine Einrichtung (14) zum Beibehalten einer Anzahl aus der Menge der nicht gemeldeten, in der Speichereinrichtung (12) gespeicherten Daten ; und

eine Einrichtung (14) zum Aktivieren der genannten Meldung, nachdem bestimmt wurde, dass die konstante Anzahl der in der Speichereinrichtung (12) gespeicherten, nicht gemeldeten Daten den genannten gespeicherten, vorbestimmten Minimalwert erreicht.

5. Ein Geraet (10) nach Anspruch 2, dadurch gekennzeichnet, dass der genannte Descrambler (22) ein Descrambler eines Fernsehers in einem Fernsehsystem, bei dem die Gebuehren nach der Einschaltzeit des Geraetes durch Impulse berechnet werden (impulse pay-per-view television system) ist und dass die genannte Speichereinrichtung (12) Daten speichert, die jedes entzerrte "impulse pay-per-view" Programm identifizieren.

6. Ein System, das eine Vielzahl der genannten Geraete (10) nach einem der vorhergehenden Ansprueche aufweist, gekennzeichnet durch die Anzahl von Zeitschlitzen in einer Gruppe, die kleiner ist als die Anzahl der genannten Geraete in dem System ; und durch die genannte Einrichtung fuer einen Wiederholversuch, die eine Einrichtung aufweist, die veranlasst, dass die genannten gespeicherten Daten in einem anderen vorbestimmten Zeitschlitz aus der genannten Gruppe als dem bei der letzten erfolglosen Meldung verwendeten, gemeldet werden.

## Revendications

1. Un dispositif (10) destiné à transmettre spontanément un relevé de données générées à distance à une station centrale (24), ledit dispositif comprenant :

des moyens de mémorisation (12) propres à emmagasiner lesdites données générées à distance ; et

des moyens de commande (14, 18) propres à provoquer la transmission spontanée desdites données emmagasinées en réponse à l'accumulation dans les moyens de mémorisation d'au moins un volume minimum prédéterminé desdites données, indépendamment de toute réponse à un signal d'interrogation demandant ladite transmission de relevé, caractérisé en ce que lesdits moyens de commande comprennent

des moyens à horloge (18) propres à fournir une indication de temps écoulé ;

des moyens (14) propres à traiter ladite indication de temps écoulé pour définir un groupe répétitif de créneaux temporels pour effectuer dans ceux-ci lesdites transmissions de relevé ;

des moyens (14) propres à affecter un créneau temporel prédéterminé au sein dudit groupe pour ladite transmission desdites données emmagasinées à la suite de l'accumulation dans lesdits moyens de mémorisation d'au moins ledit volume minimum prédéterminé desdites données, ledit créneau temporel étant affecté d'après des critères prédéterminés ;

des moyens (14) propres à vérifier si lesdites données emmagasinées ont été transmises avec succès à ladite station centrale ; et

des moyens (14) propres à réitérer l'essai de provoquer la transmission desdites données emmagasinées, lorsque l'essai précédent de transmission desdites données emmagasinées à la station centrale a été infructueux, en provoquant la transmission desdites données emmagasinées dans un créneau temporel prédéterminé différent, au sein dudit groupe, de celui emprunté pour la dernière transmission non réussie.

2. Un dispositif (10) selon la revendication 1, caractérisé en ce que ledit dispositif est couplé à un débrouilleur (22) en un poste d'abonné à l'effet d'emmagasiner des données se rapportant à la matière débrouillée par ledit débrouilleur et de transmettre spontanément un relevé desdites données emmagasinées à ladite station centrale (24).

3. Un dispositif (10) selon l'une quelconque des revendications précédentes, caractérisé en ce que lesdits moyens de commande comprennent en outre:

des moyens (12) propres à mémoriser lesdits critères prédéterminés ; et

des moyens (14) propres à modifier lesdits critères prédéterminés mémorisés.

4. Un dispositif (10) selon l'une quelconque des revendications précédentes, caractérisé en ce que lesdits moyens de commmande comprennent en outre :

des moyens (12) propres à mémoriser une indication d'un total minimum prédéterminé du volume de données non transmises qui doivent être emmagasinées dans les moyens de mémorisation (12) pour permettre le déclenchement de ladite transmission desdites données emmagasinées ;

des moyens (14) propres à tenir à jour un total du volume des données non transmises emmagasinées dans les moyens de mémorisation (12) ; et

des moyens (14) propres à déclencher ladite transmission de relevé lorsqu'il est déterminé que le total courant des données non transmises emmagasinées dans lesdits moyens de mémorisation (12) atteint ledit total minimum prédéterminé mémorisé.

5. Un dispositif (10) selon la revendication 2, caractérisé en ce que ledit débrouilleur (22) est un débrouilleur de télévision dans un système de télévision à taxation par impulsions, et en ce que lesdits moyens de mémorisation (12) emmagasinent des données identifiant chaque programme à taxation par impulsions qui est débrouillé.

6. Un réseau comportant plusieurs dispositifs (10) selon l'une quelconque des revendications précédentes, caractérisé en ce que le nombre de créneaux temporels du groupe est inférieur au nombre desdits dispositifs dans le réseau, et en ce que lesdits moyens de réitération d'essai comportent des moyens propres à provoquer la transmission desdites données emmagasinées dans un créneau temporel prédéterminé différent, au sein dudit groupe, de celui utilisé pour la dernière transmission non réussie.

FIG. 1

FIG. 2